# EUROPÄISCHE PATENTSCHRIFT

(11) **EP 2 443 045 B1**
(45) Veröffentlichungstag und Bekanntmachung des Hinweises auf die Patenterteilung: **22.01.2014**
(21) Anmeldenummer: 10724412.1
(22) Anmeldetag: 31.05.2010
(51) Int. Cl.: B65D 81/32

(54) **MEHRKOMPONENTENKARTUSCHE MIT ENTLÜFTUNGSVORRICHTUNG**
MULTIPLE COMPONENT CARTRIDGE WITH VENTILATION DEVICE
CARTOUCHE A PLUSIEURS COMPOSANTS DOTEE D'UN DISPOSITIF D'AERATION

(30) Priorität: 18.06.2009 EP 09163156
(43) Veröffentlichungstag der Anmeldung: 25.04.2012
(73) Patentinhaber: Sulzer Mixpac AG, 9469 Haag (CH)
(72) Erfinder: JUTZI, Paul, 8832 Wilen bei Wollerau (CH)
(74) Vertreter: Herrmann, Johanna
(86) Internationale Anmeldenummer: PCT/EP2010/057512
(87) Internationale Veröffentlichungsnummer: WO 2010/145932

(56) Entgegenhaltungen:
- WO-A1-91/05731
- WO-A1-2005/005305
- US-B2- 6 464 112

## Beschreibung

Die Erfindung betrifft eine Mehrkomponentenkartusche welche zum gleichzeitigen Austrag von mindestens zwei Komponenten geeignet ist, wobei der Austrag der beiden Komponenten getrennt erfolgt. Erst unmittelbar vor der Verwendung können die beiden Komponenten gemischt werden, um als Gemisch ihrer bestimmungsgemässen Verwendung zugeführt zu werden.

Eine derartige Mehrkomponentenkartusche ist bereits aus der WO9105731 bekannt. Diese Mehrkomponentenkartusche umfasst einen ersten und einen zweiten Hohlraum, der mit je einer Komponente befüllbar ist. Der erste Hohlraum und der zweite Hohlraum haben die Form eines Zylinders und sind nebeneinander angeordnet. Jeder der beiden Hohlräume mündet in eine Austrittsdüse, durch welche je eine der Komponenten austritt. An die beiden Austrittsdüsen kann ein statischer Mischer angeschlossen sein, in welchem die durch die Austrittsdüsen separat austretenden Komponenten miteinander vermischt werden. Anstatt des statischen Mischers kann an die Austrittsdüsen ein Verschlusselement angeschlossen werden, welches zum Verschliessen der beiden von den Austrittsdüsen gebildeten Öffnungen dient. Dieses Verschlusselement wird benötigt, um die beiden Komponenten in dem ersten und zweiten Hohlraum getrennt zu lagern und sie von Umgebungseinflüssen, wie Licht, Atmosphäre und dergleichen abzuschirmen.

Auf dem den Austrittsdüsen gegenüberliegenden Füllende des ersten und zweiten Hohlraums ist eine Dichtung anbringbar, die ebenfalls dem Zweck dient, die beiden Komponenten in dem ersten und dem zweiten Hohlraum getrennt zu lagern. Diese Dichtung wird anschliessend an die Befüllung des ersten und zweiten Hohlraums mit der entsprechenden Komponente am Füllende angebracht. Die Befüllung jedes der beiden Hohlräume erfolgt somit am Füllende der Mehrkomponentenkartusche. Damit die Dichtung ihren Zweck erfüllen kann, darf nach dem Befüllen zwischen der Dichtung und der entsprechenden Komponente keine Luft eingeschlossen sein, das heisst es müssen Mittel vorgesehen werden, dass die Luft vor Abschluss des Befüllens entweichen kann. Die Dichtung ist nach dem Ende des Befüllens in unmittelbarem Kontakt mit der entsprechenden Komponente. Diese Mittel sind in der W09105731 als Entlüftungsschlitze ausgebildet, die in der Wand des ersten und zweiten Hohlraums am Füllende angebracht sind. Wenn die Dichtung somit nach Abschluss des Befüllens in den entsprechenden Hohlraum eingesetzt wird, kann Luft, die sich zwischen der Komponente und der Dichtung befindet, durch die Schlitze entweichen.

Nachteilig an diesem Aufbau ist, dass bei einer Befüllung über die entsprechende Austrittsdüse eine derartige Anordnung von Entlüftungsschlitzen unwirksam ist. Eine Befüllung über die Austrittsdüse wird insbesondere dann vorgenommen, wenn die Mehrkomponentenkartusche erst kurz vor Anwendung befüllt wird. Die Mehrkomponentenkartusche wird in leerem Zustand angeliefert und von dem Anwender oder einem Zwischenhändler unmittelbar vor Gebrauch mit den entsprechenden Komponenten befüllt.

Aufgabe der Erfindung ist daher, eine Mehrkomponentenkartusche zu entwickeln, welche von der Austrittsseite her befüllbar ist, wobei zu Beginn der Befüllung von der Füllmasse eingeschlossene Luft entweichen kann, bevor die Befüllung abgeschlossen ist.

Die Lösung umfasst eine Mehrkomponentenkartusche, welche eine erste Vorratskammer für eine erste Komponente, sowie eine zweite Vorratskammer für eine zweite Komponente umfasst. Die erste Komponente ist im Lagerzustand getrennt von der zweiten Komponente. Die erste Vorratskammer ist neben der zweiten Vorratskammer angeordnet, wobei in der ersten Vorratskammer ein erster Kolben beweglich aufgenommen ist und in der zweiten Vorratskammer ein zweiter Kolben beweglich aufgenommen ist. Der erste und zweite Kolben sind mittels eines Austragmittels, wie beispielsweise eines Stössels oder unter Aufbringung von Druckfluid bewegbar, um die beiden Komponenten gleichzeitig auszutragen.

Jede der ersten oder zweiten Vorratskammern weist je ein Füllende und je ein Austrittsende auf und die erste und zweite Vorratskammer sind zumindest am Austrittsende miteinander verbunden, wobei die erste und zweite Vorratskammer eine erste und zweite Längsabmessung aufweisen, die sich zwischen dem entsprechenden Füllende und dem entsprechenden Austrittsende erstreckt. Die erste Vorratskammer weist eine erste Innenwand und die zweite Vorratskammer eine zweite Innenwand auf, wobei das entsprechende Austrittsende in ein entsprechendes Austrittselement in einer Mündungsöffnung mündet. Ein Entlüftungselement ist stromaufwärts der Mündungsöffnung an zumindest einer der Innenwände zumindest einer der ersten oder zweiten Vorratskammern angeordnet, wobei das Entlüftungselement sich über maximal ein Drittel der Längsabmessung der Vorratskammer erstreckt.

Nach einem bevorzugten Ausführungsbeispiel der Mehrkomponentenkartusche ist das Entlüftungselement als eine Erhebung ausgebildet. Insbesondere kann das Entlüftungselement je eine erste Erhebung und eine zweite Erhebung umfassen. Wenn das Entlüftungselement als eine Erhebung ausgebildet ist, kann der Austritt von Luft bei der Befüllung der entsprechenden Vorratskammer in einfacher Weise erfolgen. Die zwischen der Füllmasse und dem Kolben eingeschlossene Luft bildet eine Blase aus, die sich in der Regel in der Nähe der Innenwand der Vorratskammer befindet.

Der Kolben liegt an der Innenwand der Vorratskammer über eine elastische Kolbenlippe an, und zwar entlang der gesamten Umfangsabmessung der Vorratskammer mit Ausnehme des Entlüftungselements. Wenn das Entlüftungselement als Erhebung ausgebildet ist, kann die Kolbenlippe der durch die Erhebung bedingten Wölbung der Oberfläche der Innenwand nicht dichtend folgen. Hieraus ergibt sich, dass zwischen der Innenwand und der Kolbenlippe im Bereich der Erhebung ein Abstand oder Spalt ausgebildet ist. Dieser Spalt ist zu schmal, als dass die Füllmasse durch diesen Spalt austreten kann, insbesondere dann, wenn die Füllmasse zähflüssig ist. Der Spalt ist aber breit genug, um die Luft, welche sich in der Blase zwischen Füllmasse und Kolben angesammelt hat, entweichen zu lassen.

Nach einem besonders bevorzugten Ausführungsbeispiel umfasst das Entlüftungselement zwei Erhebungen, die in Längsrichtung der Vorratskammer gesehen, nebeneinander angeordnet sind. Zwischen den beiden Erhebungen ist ein Kanal ausgebildet, welcher einen Strömungsweg für die Luft ausbildet, die sich beim Befüllen zwischen der durch die entsprechende Austrittsöffnung einfliessenden Füllmasse und dem von der Füllmasse in Richtung des Füllendes zu verschiebenden Kolbens befindet. Der Kanal zwischen den Erhebungen ist insbesondere auch deswegen vorteilhaft, weil eine genau definierte Spaltbreite erzeugbar ist. Das heisst für Füllmassen mit verschiedenen rheologischen Eigenschaften kann jeweils vorab die optimale Spaltbreite eingestellt werden, indem die Höhe der Erhebungen angepasst wird.

Zumindest je einer der ersten und zweiten Kolben weist je einen Kolbenkörper und eine Kolbenlippe auf, wobei mittels der Kolbenlippe der Kolben in Kontakt mit der Innenwand der entsprechenden Vorratskammer haltbar ist, wobei die Kolbenlippe einen Ringraum zwischen Kolbenkörper und Innenwand der Vorratskammer ausfüllt, wobei die entsprechende Erhebung des Entlüftungselements eine maximale Höhe aufweist, die kleiner als der Abstand des Kolbenkörpers von der Innenwand ist.

Zumindest eine der ersten oder zweiten Erhebungen ist als Rippe ausgebildet. Diese Rippe kann beispielsweise die Form eines Stegs, einer vorspringenden Kante oder eines Wulstes annehmen.

Die erste Erhebung ist vorzugsweise im wesentlichen parallel zur zweiten Erhebung angeordnet, sodass zwischen der ersten Erhebung und der entsprechenden zweiten Erhebung ein Kanal ausgebildet ist. Wenn der Kanal eine im wesentlichen konstante Breite aufweist, bildet sich ein im wesentlichen gleichbleibender Stömungsquerschnitt aus, innerhalb dessen die Luft strömt.

Der Kolben hat eine Höhe, welche den Abstand zwischen der Kolbenoberfläche, welche der Füllmasse zugewendet ist und der gegenüberliegenden Kolbenoberfläche bezeichnet. Die Länge des Entlüftungselements ist kleiner als die Höhe des Kolbens.

Nach einem besonders bevorzugten Ausführungsbeispiel ist das Entlüftungselement gegenüberliegend der Trennwand angeordnet. Durch die Entlüftung wird eine Luftblase, die sich zwischen Füllmasse und Kolben befindet, entfernt, das heisst, ein luftgefüllter Hohlraum zwischen Füllmasse und Kolben zum Verschwinden gebracht. Das in dem Hohlraum befindliche kompressible Medium, die Luft, wird durch ein inkompressibles Medium, die Füllmasse, ersetzt. Während des Entweichens der Luft wird Druck abgebaut, das heisst ein Teil der Innenwand der entsprechenden Vorratskammer ist zeitweise einem geringeren Druck ausgesetzt als der Druck auf den Teil der Vorratskammer der die Füllmasse enthält. Die Wand der Vorratskammer ist nicht vollkommen steif. Um einen Verzug dieser Wand während der Entlüftung zu verhindern, soll die Innenwand der ersten Vorratskammer derart entlastet werden, dass die resultierende Kraft auf die Innenwand der ersten Vorratskammer entgegengesetzt zur resultierenden Kraft auf die Innenwand der zweiten Vorratskammer gerichtet ist. Somit heben sich die beiden resultierenden Kräfte im Idealfall auf oder gleichen sich zumindest teilweise aus. Ein teilweiser Ausgleich findet statt, wenn das Mischungsverhältnis von 1:1 abweicht, also beispielsweise 2:1, 4:1 oder sogar 10:1 beträgt. Bei einem 10-fachen Volumen der ersten Komponente im Verhältnis zur zweiten Komponente wird auch die zwischen Füllmasse und Kolben eingeschlossene Luft der ersten Komponente ein Vielfaches der eingeschlossenen Luft der zweiten Komponente betragen. Wenn sich die genannten resultierenden Kräfte zumindest teilweise ausgleichen, kann ein Verzug der Wand der Vorratskammer vermieden werden. Ein derartiger Verzug kann nachteilig sein, weil er zu Schrägstellungen des Kolbens und somit im Extremfall zur Leckage von Füllmasse führen kann.

Die erste Vorratskammer weist eine erste Längsachse und die zweite Vorratskammer eine zweite Längsachse auf. Das Entlüftungselement erstreckt sich nach einem bevorzugten Ausführungsbeispiel parallel zur entsprechenden Längsachse.

Jede der Vorratskammern weist bevorzugt je eine Umfangsabmessung auf, wobei das Entlüftungselement eine Breite von maximal einem 1/20, bevorzugt 1/50, besonders bevorzugt 1/100 der Umfangsabmessung der entsprechenden Vorratskammer aufweist. Die Breite des Entlüftungselements ist insbesondere deshalb beschränkt, weil die beiden Stellen, an welchen die Kolbenlippe sich von der Innenwand abhebt, um den Durchtritt der Luft zu ermöglichen, möglichst nahe aneinander liegen sollen. Hierdurch wird gewährleistet, dass sich die resultierenden Kräfte, die in Umfangsrichtung wirken, im wesentlichen aufheben. Ist die Breite des Entlüftungselements klein, dann schliessen die Tangenten eines ersten Umfangspunkts und eines zweiten Umfangspunkts an die Umfangsabmessung der entsprechenden Innenwand nur einen kleinen Winkel zueinander ein. Dies hat zur Folge, dass die in Umfangsrichtung wirkenden Kräfte, die entlang dieser Tangenten entgegengesetzt zueinander gerichtet sind, sich grösstenteils ausgleichen.

Das Entlüftungselement weist vorzugsweise eine Höhe von maximal einem Prozent, bevorzugt 0,5 %, besonders bevorzugt 0,25% des Durchmessers der Vorratskammer auf. Bei einer grösseren Höhe würde die Kolbenlippe sich so weit von der Innenwand der entsprechenden Vorratskammer abheben, dass ein Austritt von Füllmasse durch diese Öffnung nicht mehr ausgeschlossen werden kann.

Zur weiteren Verbesserung des Ausgleichs der axialen Kräfte und der Kräfte in Umfangsrichtung kann das Entlüftungselement eine erste und eine zweite Erhebung umfassen, wobei die erste Erhebung und die zweite Erhebung in einem Abstand zueinander angeordnet sind, wobei der Abstand zwischen der ersten Erhebung und der zweiten Erhebung maximal ein 1/20, bevorzugt 1/50, besonders bevorzugt 1/100 der Umfangsabmessung der entsprechenden Vorratskammer beträgt.

Das Entlüftungselement kann zumindest einen Abschnitt aufweisen, der zur Längsachse geneigt ist. Hierdurch wird ein Austritt von Füllmasse zusätzlich erschwert, da sich der Austrittsweg der Füllmasse verlängert. Diese Anordnung kann insbesondere für wenig zähflüssige Füllmassen von Vorteil sein. In diesem Fall gelangt zwar Füllmasse in die Öffnung zwischen der Kolbenlippe und der entsprechenden Erhebung des Entlüftungselements, allerdings wird sie auf dem Austrittsweg derart verzögert, dass die Kolbenlippe am Ende des Entlüftungselements angelangt ist, bevor die Füllmasse an der Kolbenlippe vorbei in Richtung des entsprechenden ersten und zweiten Füllendes austreten kann. Alternativ oder in Ergänzung hierzu kann das Entlüftungselement zumindest einen gekrümmten Abschnitt aufweisen. Des weiteren kann das Entlüftungselement eine veränderliche Höhe aufweisen oder auch eine sich über die Länge des Entlüftungselements veränderliche Breite aufweisen.

Nachfolgend wird die Erfindung anhand der Zeichnungen erläutert. Es zeigen:
- Fig. 1: einen Schnitt durch eine Mehrkomponentenkartusche gemäss eines ersten Ausführungsbeispiels der Erfindung
- Fig. 2: eine Ansicht eines Teils der Mehrkomponentenkartusche gemäss Fig. 1
- Fig. 3a: ein Detail der Mehrkomponentenkartusche gemäss Fig. 1 im Bereich der Austrittsöffnungen
- Fig. 3b: ein Detail der Fig. 3a
- Fig. 4a: ein Detail einer Austrittsöffnung einer Mehrkomponentenkartusche gemäss Fig. 1
- Fig. 4b: ein Detail der Fig. 4a
- Fig. 5: eine Variante einer Entlüftungsvorrichtung gemäss der Erfindung
- Fig. 6: eine weitere Variante einer Entlüftungsvorrichtung gemäss der Erfindung

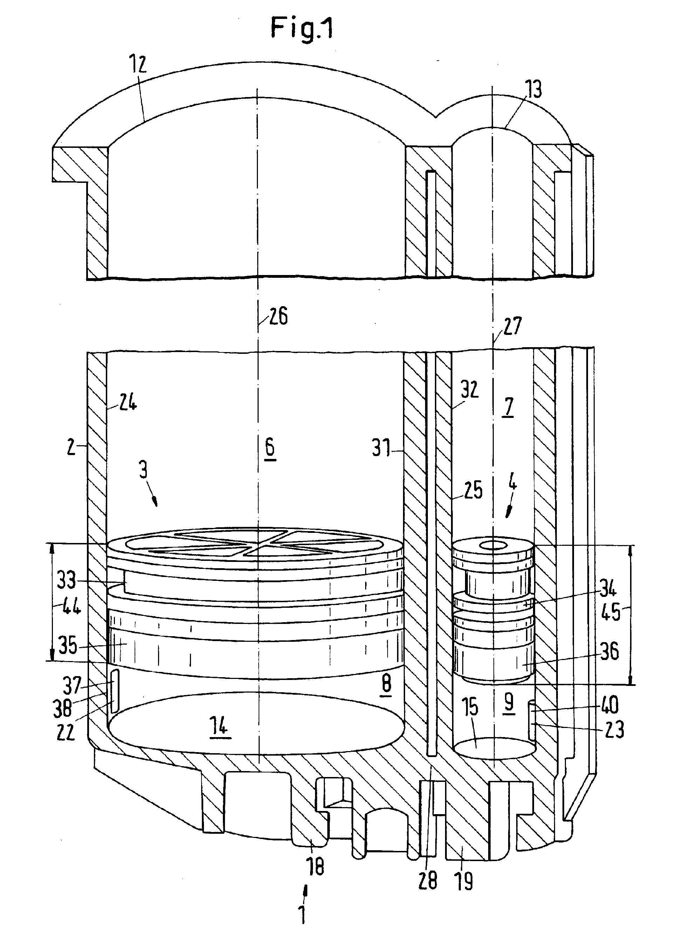

Fig. 1 zeigt ein erstes Ausführungsbeispiel der erfindungsgemässen Mehrkomponentenkartusche 1. Insbesondere wird eine derartige Mehrkomponentenkartusche zur Dosierung einer Füllmasse verwendet, die zumindest zwei Komponenten umfasst, die vor ihrer gemeinsamen Anwendung nicht miteinander in Kontakt gelangen dürfen. Die Mehrkomponentenkartusche 1 umfasst eine erste Vorratskammer 6 für eine erste Komponente 8, eine zweite Vorratskammer 7 für eine zweite Komponente 9. Die erste Vorratskammer 6 ist getrennt von der zweiten Vorratskammer 7, sodass die beiden Komponenten nicht miteinander in Kontakt kommen. Derartige Komponenten interagieren zumeist miteinander, sobald sie miteinander in Berührung kommen, wobei chemische Reaktionen ablaufen können. Diese Interaktion der Komponenten ist zumeist der Effekt, welcher in einer Anwendung benötigt wird, allerdings ist diese Interaktion unerwünscht, solange die Komponenten gelagert werden. Selbstverständlich kann jede der Komponenten wiederum ein Gemisch aus mehreren Substanzen umfassen. Die Mehrkomponentenkartusche wird nämlich teilweise in befülltem Zustand gelagert, der nachfolgend als Lagerzustand bezeichnet wird. Für die gesamte Dauer des Lagerzustandes muss sichergestellt sein, dass die beiden Komponenten 8, 9 nicht miteinander in Berührung kommen.

Die Mehrkomponentenkartusche hat ein erstes Füllende 12 und ein zweites Füllende 13, über welche ein erster Kolben 3 und ein zweiter Kolben 4 in die entsprechende erste und zweite Vorratskammer 6,7 eingebracht werden können. In der ersten Vorratskammer 6 ist der erste Kolben 3 beweglich aufgenommen. In der zweiten Vorratskammer 7 ist der zweite Kolben 4 beweglich aufgenommen. Dieser erste Kolben 3 gleitet entlang einer ersten Innenwand 24 der Vorratskammer 6 in Richtung des ersten Austrittsendes 14, wenn die in der ersten Vorratskammer 6 befindliche Füllmasse, also die erste Komponente 8 ausgeschoben werden soll.

Der zweite Kolben 4 gleitet entlang einer zweiten Innenwand 25 der zweiten Vorratskammer 7 in Richtung des zweiten Austrittsendes 15, wenn die in der zweiten Vorratskammer 7 befindliche Füllmasse, also die zweite Komponente 9 ausgeschoben werden soll. Die erste Komponente 8 und die zweite Komponente 9 sind in dieser Darstellung als transparente Füllmasse ausgebildet, sodass die Anordnung der ersten und zweiten Entlüftungselemente 22, 23 besser sichtbar ist.

Der erste und zweite Kolben 3, 4 sind beispielsweise mittels eines nicht dargestellten Stössels bewegbar. Der Stössel ist insbesondere derart ausgestaltet, dass er auf dem ersten und dem zweiten Kolben 3,4 aufliegt. Mit Hilfe des Stössels wird der erste Kolben 3 vom ersten Füllende 12 in Richtung des ersten Austrittsendes 14 bewegt und der zweite Kolben 4 vom zweiten Füllende 13 zum zweiten Austrittsende 15 bewegt, wenn die Komponenten 8, 9 gleichzeitig ausgetragen werden.

Die erste und zweite Vorratskammer 6, 7 sind zumindest am Austrittsende 14, 15 miteinander derart miteinander verbunden, dass die Lage der ersten Vorratskammer 6 relativ zur zweiten Vorratskammer 7 bestimmt ist. Die erste und zweite Vorratskammer 6 weist eine erste Längsabmessung 16 auf, die sich zwischen dem ersten Füllende 12 und dem ersten Austrittsende 14 erstreckt, die zweite Vorratskammer 7 weist eine zweite Längsabmessung 17 auf, die sich zwischen dem zweiten Füllende 13 und dem zweiten Austrittsende 15 erstreckt. Die erste Vorratskammer 6 weist eine erste Innenwand 24 und die zweite Vorratskammer 7 eine zweite Innenwand 25 auf. Die erste und zweite Innenwand 24, 25 umschliesst die entsprechende Vorratskammer 6,7.

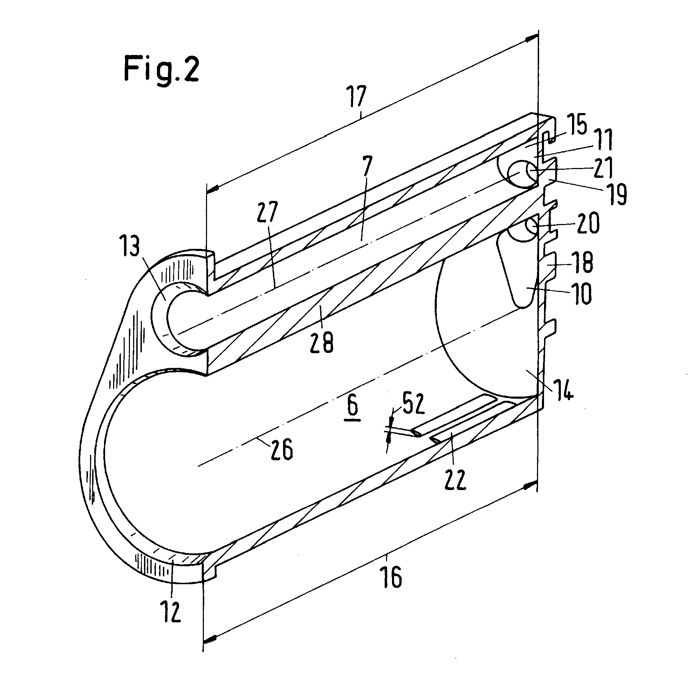

Das jeweilige Austrittsende 14, 15 der Vorratskammer 6,7 mündet in ein Austrittselement 18, 19, welches eine entsprechende erste Mündungsöffnung 20 und eine zweite Mündungsöffnung 21 enthält, die in Fig. 2 sichtbar sind. Die erste Komponente 8 wird somit aus der ersten Vorratskammer 6 in das erste Austrittselement 18 ausgeschoben und durch die erste Mündungsöffnung 20 geleitet. Entsprechendes gilt für die zweite Komponente 9, welche in das zweite Austrittselement 19 ausgeschoben und durch die zweite Mündungsöffnung 21 geleitet wird. Im Anschluss an die erste und zweite Mündungsöffnung 20, 21 werden zwei Stränge der ersten und zweiten Komponente 8, 9 gebildet, die entweder in dieser Form einer Anwendung zugeführt werden oder alternativ dazu in einen an das erste und zweite Austrittselement 18,19 angeschlossenen Mischer eingeleitet werden, in welchem die beiden Stränge miteinander durchmischt werden.

Ein Entlüftungselement 22, 23 ist stromaufwärts der entsprechenden Mündungsöffnung 20, 21 an zumindest einer der Innenwände 24, 25 zumindest einer der ersten oder zweiten Vorratskammern 6, 7 angeordnet, wobei das Entlüftungselement 22, 23 sich über maximal ein Drittel der Längsabmessung 16, 17 der entsprechenden Vorratskammer 6, 7 erstreckt. Das Entlüftungselement 22, 23 ist vorgesehen, um zwischen dem entsprechenden Kolben 3,4 und der Füllmasse eingeschlossene Luft aus der entsprechenden Vorratskammer 6,7 entweichen zu lassen. Die Mehrkomponentenkartusche wird hierbei über das erste Austrittselement 18 bzw. das zweite Austrittselement 19 befüllt. Der Kolben 3,4 befindet sich vor der Befüllung an einer Position, die den geringstmöglichen Abstand von dem ersten bzw. zweiten Austrittsende 14, 15 hat. In dieser Position der Kolben befindet sich nur eine kleine Luftmenge zwischen dem entsprechenden Kolben 3,4 und dem Austrittsende 14, 15, welches hier als eine Wand mit einer nur in Fig. 2 gezeigten entsprechenden ersten und zweiten Mündungsöffnung 18, 19 ausgebildet ist.

Wenn die erste Komponente 8 und die zweite Komponente 9 in die entsprechende Vorratskammer 6, 7 gelangen, wird die zwischen entsprechendem Kolben 3,4 und Füllmasse befindliche Luft komprimiert und kann durch den zwischen dem Kolben 3, 4 und der Innenwand 24, 25 durch den durch das Entlüftungselement 22, 23 gebildeten Zwischenraum entweichen.

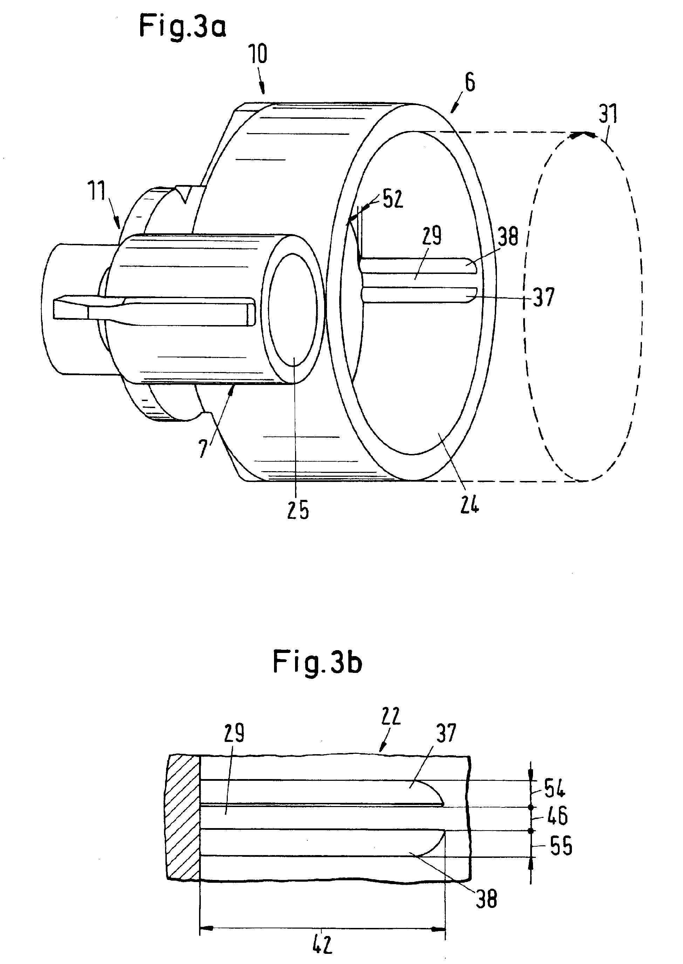

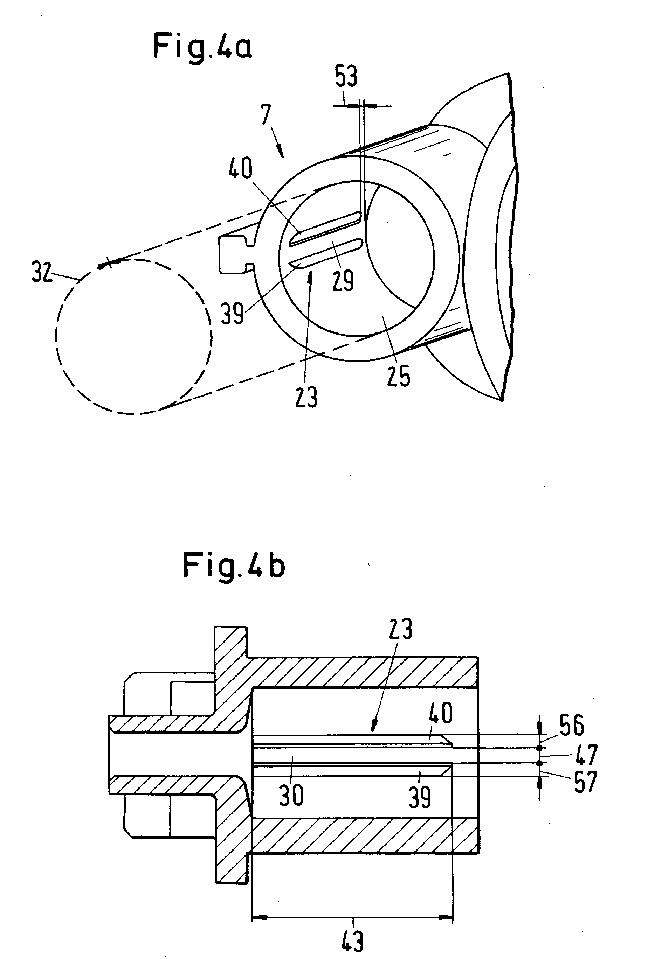

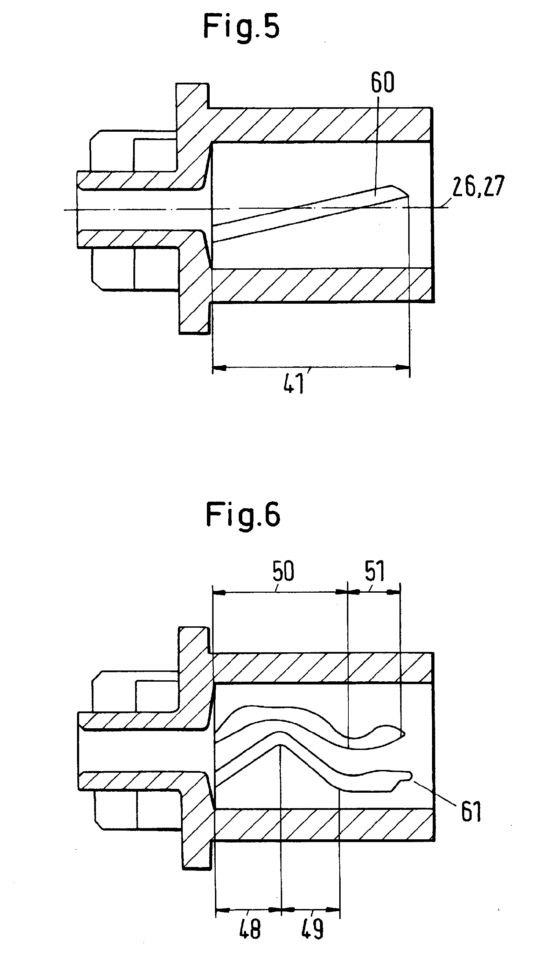

Das Entlüftungselement 22, 23 kann insbesondere als eine Erhebung 37, 38, 39, 40 ausgebildet sein, wie beispielsweise in Fig. 3a oder Fig. 4a gezeigt ist. Auch das Entlüftungselement 60 gemäss Fig. 5 oder das Entlüftungselement 61 gemäss Fig. 6 kann als Erhebung ausgebildet sein.

Das erste Entlüftungselement 22 umfasst gemäss des Ausführungsbeispiels gemäss Fig.1, Fig. 2 sowie Fig. 3a oder Fig. 3b je eine erste Erhebung 37 und eine zweite Erhebung 38. Das zweite Entlüftungselement umfasst gemäss Fig.1, Fig. 2 sowie Fig. 4a oder Fig. 4b je eine erste Erhebung 39 und eine zweite Erhebung 40.

Zumindest je einer der ersten und zweiten Kolben 3,4 weist je einen Kolbenkörper 33, 34 und eine Kolbenlippe 35, 36 auf, wobei mittels der Kolbenlippe der Kolben 3,4 in Kontakt mit der entsprechenden Innenwand 24, 25 der entsprechenden Vorratskammer 6, 7 haltbar ist. Die Kolbenlippe 35, 36 bildet somit eine Dichtung für die Füllmasse aus, mittels welcher verhindert wird, dass die Füllmasse aus der Vorratskammer austritt. Die Kolbenlippe 35, 36 füllt einen Ringraum zwischen Kolbenkörper 33, 34 und Innenwand der Vorratskammer 6, 7 aus.

Im Bereich des Entlüftungselements 22, 23 ist der Kontakt zwischen der Kolbenlippe 35, 36 und der Innenwand 24, 25 unterbrochen. Das Entlüftungselement ist insbesondere als eine Erhebung 37, 38, 39, 40 ausgebildet. Die Kolbenlippe liegt auf dieser Erhebung auf, kann aber dem Verlauf dieser Erhebung nicht dichtend folgen, wodurch der oben genannte Zwischenraum bestehen bleibt. Die entsprechende Erhebung 37, 38, 39, 40 des Entlüftungselements 22, 23 hat hierzu insbesondere eine maximale Höhe 52, 53, die kleiner als der Abstand des Kolbenkörpers 33, 34 von der Innenwand 24, 25 ist. Der Kolbenkörper 33, 34 hat einen kleineren äusseren Durchmesser als der Durchmesser der entsprechenden Vorratskammer 6, 7. Der Kolbenkörper 33, 34 gleitet berührungslos im Inneren der entsprechenden Vorratskammer 6,7, der fluiddichte Kontakt zwischen Kolben 3,4 und entsprechender Vorratskammer 6,7 erfolgt über die Kolbenlippe 35, 36.

Der erste Kolben 3 hat eine erste Höhe 44 und der zweite Kolben 4 hat eine zweite Höhe 45. Die Länge 42, 43 des entsprechenden Entlüftungselements 22, 23 ist kleiner als die entsprechende Höhe 44, 45 des Kolbens. Die Länge 42,43 des Entlüftungselements ist grösser als der Abstand der Kolbenlippe 35, 36 von dem entsprechenden Austrittsende 14, 15, wenn sich der Kolben 3,4 in der Endposition befindet, in welcher er dem entsprechenden Austrittsende 14, 15 am nächsten ist.

In Fig. 2 ist gezeigt, dass die erste Vorratskammer 6 neben der zweiten Vorratskammer 7 angeordnet ist. Die erste Vorratskammer 6 ist von der zweiten Vorratskammer 7 durch eine Trennwand 28 getrennt, sodass die beiden Komponenten 8,9 getrennt gelagert werden können. In diesem Ausführungsbeispiel erstreckt sich die erste Vorratskammer 6 entlang der Längsachse 26, die zweite Vorratskammer 7 entlang der Längsachse 27. Die erste Vorratskammer 6 und die zweite Vorratskammer 7 münden an dem ersten Austrittsende 14 in eine erste Austrittsöffnung 10 und an dem zweiten Austrittsende 15 in eine zweite Austrittsöffnung 11.

Durch die erste Austrittsöffnung 10 und die zweite Austrittsöffnung 11 können die erste und die zweite Komponente 8, 9 zu einem hier nicht dargestellten Mischer geleitet werden. Es können auch mehrere erste oder mehrere zweite Austrittsöffnungen vorgesehen sein, zwischen denen Stege ausgebildet sind.

Das Entlüftungselement 22, 23 ist gemäss Fig. 1, Fig. 2, Fig. 3a, Fig. 4a gegenüberliegend der Trennwand 28 angeordnet. Das heisst, die Entlüftung findet an einer Stelle statt, die von der Trennwand 28 möglichst weit entfernt ist.

Die erste Vorratskammer 6 weist eine erste Längsachse 26 und die zweite Vorratskammer 7 eine zweite Längsachse 27 auf, wobei das Entlüftungselement 22, 23 gemäss einer der Fig. 1 bis Fig. 4b sich parallel zur entsprechenden Längsachse 26, 27 erstreckt. Hierdurch wird die Luft im wesentlichen in einer Richtung ausgeschoben, die parallel zur entsprechenden Längsachse liegt.

Jede der Vorratskammern 6,7 weist je eine Umfangsabmessung 31,32 auf, wobei das Entlüftungselement 22, 23 eine Breite von maximal einem 1/20, bevorzugt 1/50, besonders bevorzugt 1/100 der Umfangsabmessung 31,32 der entsprechenden Vorratskammer 6,7 aufweist.

Insbesondere weist das Entlüftungselement 22, 23 eine Höhe von maximal einem Prozent, bevorzugt 0,5 %, besonders bevorzugt 0,25% des Durchmessers der Vorratskammer 6,7 auf.

Die erste Erhebung 37, 39 und die zweite Erhebung 38, 40 sind in einem Abstand 46, 47 zueinander angeordnet, wobei der Abstand 46, 47 zwischen der ersten Erhebung 37, 39 und der zweiten Erhebung 38, 40 maximal ein 1/20, bevorzugt 1/50, besonders bevorzugt 1/100 der Umfangsabmessung 31, 32 der entsprechenden Vorratskammer 6, 7 beträgt.

Fig. 3a zeigt ein Detail der Mehrkomponentenkartusche gemäss Fig. 1 im Bereich der ersten und zweiten Austrittsöffnungen 10, 11. Entlang der teilweise dargestellten ersten Innenwand 24 der ersten Vorratskammer 6 ist das erste Entlüftungselement 22 gezeigt.

Fig. 3b ist ein Detail der Fig. 3a, welches das Entlüftungselement 22 in vergrössertem Masstab zeigt. Insbesondere ist eine der ersten Erhebungen 37, 38 als Rippe ausgebildet. Die erste Erhebung 37 ist parallel zur zweiten Erhebung 38 angeordnet, sodass zwischen der ersten Erhebung 37 und der zweiten Erhebung 38 ein Kanal 29 ausgebildet ist.

Fig. 4a zeigt ein Detail der zweiten Austrittsöffnung 11 einer Mehrkomponentenkartusche gemäss Fig. 1 Entlang der teilweise dargestellten zweiten Innenwand 25 der zweiten Vorratskammer 7 ist das zweite Entlüftungselement 23 gezeigt.

Fig. 4b zeigt ein Detail der Fig. 4a, welches das zweite Entlüftungselement 23 in vergrössertem Masstab zeigt. Insbesondere ist eine der zweiten Erhebungen 39, 40 als Rippe ausgebildet. Die erste Erhebung 39 ist parallel zur zweiten Erhebung 40 angeordnet, sodass zwischen der ersten Erhebung 39 und der zweiten Erhebung 40 ein Kanal 30 ausgebildet ist.

Fig. 5 zeigt eine Variante einer Entlüftungsvorrichtung gemäss der Erfindung Das Entlüftungselement 22, 23 weist zumindest einen Abschnitt 41, 48, 49 auf, der zur Längsachse 26, 27 geneigt.

Fig. 6 zeigt eine weitere Variante einer Entlüftungsvorrichtung gemäss der Erfindung. Das Entlüftungselement 22, 23 weist zumindest einen Abschnitt 41, 48, 49 auf, der zumindest einen gekrümmten Abschnitt 50, 51 aufweist.

Das Entlüftungselement 22, 23 nach jedem der vorhergehenden Ausführungsbeispiele kann eine veränderliche Höhe 52, 53 aufweisen.

Das Entlüftungselement 22, 23 nach jedem der vorhergehenden Ausführungsbeispiele kann eine sich über dessen Länge 42, 43 veränderliche Breite 54, 55 aufweisen.

## Patentansprüche

1. Mehrkomponentenkartusche (1), umfassend eine erste Vorratskammer (6) für eine erste Komponente (8), eine zweite Vorratskammer (7) für eine zweite Komponente (9), wobei die erste Vorratskammer (6) getrennt von der zweiten Vorratskammer (7) ist, wobei die erste Vorratskammer (6) neben der zweiten Vorratskammer (7) angeordnet ist, wobei in der ersten Vorratskammer (6) ein erster Kolben (3) beweglich aufgenommen ist und in der zweiten Vorratskammer (7) ein zweiter Kolben (4) beweglich aufgenommen ist, wobei jede der ersten oder zweiten Vorratskammern je ein Füllende (12,13) und je ein Austrittsende (14,15) aufweisen und die erste und zweite Vorratskammer (6,7) zumindest am Austrittsende (14,15) miteinander verbunden sind, wobei die erste und zweite Vorratskammer (6,7) eine erste und zweite Längsabmessung (16, 17) aufweisen, die sich zwischen dem entsprechenden Füllende (12,13) und dem entsprechenden Austrittsende (14,15) erstreckt, wobei die erste Vorratskammer (6) eine erste Innenwand (24) und die zweite Vorratskammer (7) eine zweite Innenwand (25) aufweist, wobei das entsprechende Austrittsende (14, 15) in ein erstes Austrittselement (18) in einer ersten Mündungsöffnung (20) und in ein zweites Austrittselement (19) einer zweiten Mündungsöffnung (21) mündet, **dadurch gekennzeichnet, dass** ein Entlüftungselement (22, 23) stromaufwärts der entsprechenden Mündungsöffnung (20, 21) an zumindest einer der Innenwände (24, 25) zumindest einer der ersten oder zweiten Vorratskammern (6,7) angeordnet ist, wobei das Entlüftungselement (22, 23) sich über maximal ein Drittel der Längsabmessung (16, 17) der Vorratskammer (6,7) erstreckt, wobei der Kolben eine Höhe (44, 45) hat, wobei die Länge (42, 43) des Entlüftungselements (22, 23) kleiner als die Höhe (44, 45) des Kolbens ist.

2. Mehrkomponentenkartusche (1) nach Anspruch 1, wobei das Entlüftungselement (22, 23) als eine Erhebung (37, 38, 39, 40) ausgebildet ist.

3. Mehrkomponentenkartusche (1) nach Anspruch 1, wobei das erste Entlüftungselement (22) je eine erste Erhebung (37, 39) und das zweite Entlüftungselement (23) je eine zweite Erhebung (38, 40) umfasst.

4. Mehrkomponentenkartusche nach einem der vorhergehenden Ansprüche, wobei zumindest je einer der ersten und zweiten Kolben (3,4) je einen Kolbenkörper (33, 34) und eine Kolbenlippe (35, 36) aufweist, wobei mittels der Kolbenlippe der Kolben (3,4) in Kontakt mit der Innenwand (24, 25) der entsprechenden Vorratskammer (6, 7) haltbar ist, wobei die Kolbenlippe (35, 36) einen Ringraum zwischen Kolbenkörper (33, 34) und Innenwand der Vorratskammer ausfüllt (6, 7), wobei die entsprechende Erhebung (37, 38, 39, 40) des Entlüftungselements (22, 23) eine maximale Höhe (52, 53) aufweist, die kleiner als der Abstand des Kolbenkörpers (33, 34) von der Innenwand (24,25) ist.

5. Mehrkomponentenkartusche (1) nach Anspruch 3, wobei zumindest eine der ersten oder zweiten Erhebungen (37, 38, 39, 40) als Rippe ausgebildet ist.

6. Mehrkomponentenkartusche nach einem der Ansprüche 3 bis 5, wobei die erste Erhebung (37, 39) parallel zur zweiten Erhebung (38, 40) angeordnet ist, sodass zwischen der ersten Erhebung (37, 39) und der entsprechenden zweiten Erhebung (38, 40) ein Kanal (29, 30) ausgebildet ist.

7. Mehrkomponentenkartusche (1) nach einem der vorhergehenden Ansprüche, wobei das Entlüftungselement (22, 23) gegenüberliegend der Trennwand (28) angeordnet ist.

8. Mehrkomponentenkartusche (1) nach einem der vorhergehenden Ansprüche, wobei die erste Vorratskammer (6) eine erste Längsachse (26) und die zweite Vorratskammer (7) eine zweite Längsachse (27) aufweist, wobei das Entlüftungselement (22, 23) sich parallel zur entsprechenden Längsachse (26, 27) erstreckt.

9. Mehrkomponentenkartusche nach einem der vorhergehenden Ansprüche, wobei jede der Vorratskammern (6,7) je eine Umfangsabmessung (31,32) aufweist, wobei das Entlüftungselement (22, 23) eine Breite von maximal einem 1/20, bevorzugt 1/50, besonders bevorzugt 1/100 der Umfangsabmessung (31,32) der entsprechenden Vorratskammer (6,7) aufweist.

10. Mehrkomponentenkartusche nach einem der vorhergehenden Ansprüche, wobei das Entlüftungselement (22, 23) eine Höhe von maximal einem Prozent, bevorzugt 0,5 %, besonders bevorzugt 0,25% des Durchmessers der Vorratskammer (6,7) aufweist.

11. Mehrkomponentenkartusche nach einem der Ansprüche 3 bis 10, wobei die erste Erhebung (37, 39) und die zweite Erhebung (38, 40) in einem Abstand (46, 47) zueinander angeordnet sind, wobei der Abstand (46, 47) zwischen der ersten Erhebung (37, 39) und der zweiten Erhebung (38, 40) maximal ein 1/20, bevorzugt 1/50, besonders bevorzugt 1/100 der Umfangsabmessung (31, 32) der entsprechenden Vorratskammer (6, 7) beträgt.

12. Mehrkomponentenkartusche einem der vorhergehenden Ansprüche, wobei das Entlüftungselement (22, 23) zumindest einen Abschnitt (41, 48, 49) aufweist, der zur Längsachse (26, 27) geneigt ist und/oder zumindest einen gekrümmten Abschnitt (50, 51) aufweist.

13. Mehrkomponentenkartusche nach einem der vorhergehenden Ansprüche, wobei das Entlüftungselement (22, 23) eine veränderliche Höhe (52, 53) aufweist.

14. Mehrkomponentenkartusche nach einem der vorhergehenden Ansprüche, wobei das Entlüftungselement (22, 23) eine sich über dessen Länge (42, 43) veränderliche Breite (54, 55) aufweist.

## Claims

1. A multicomponent cartridge (17), including a first storage chamber (6) for a first component (8) and a second storage chamber (7) for a second component (9), wherein the first storage chamber (6) is separate from the second storage chamber (7), with the first storage chamber (6) being arranged next to the second storage chamber (7), with a first piston (3) being movably received in the first storage chamber (6) and a second piston (4) being movably received in the second storage chamber (7), with each of the first or second storage chambers having a respective filling end (12, 13) and a respective discharge end (14, 15) and the first and second storage chambers (6, 7) being connected to one another at least at the discharge end (14, 15), with the first and second storage chambers (6, 7) having a first and second longitudinal dimension (16, 17) which extends between the corresponding filling end (12, 13) and the corresponding discharge end (14, 15), with the first storage chamber (6) having a first inner wall (24) and the second storage chamber (7) having a second inner wall (25), with the corresponding discharge end (14, 15) opening into a first discharge element (18) in a first opening aperture (20) and into a second discharge element (19) of a second opening aperture (21), **characterized in that** a venting element (22, 23) is arranged upstream of the corresponding opening aperture (20, 21) at at least one of the inner walls (24, 25) of at least one of the first or second storage chambers (6, 7), with the venting element (22, 23) extending over a maximum of one third of the longitudinal dimension (16, 17) of the storage chamber (6, 7), wherein the piston has a height (44, 45), wherein the length (42, 43) of the venting element (22, 23) is smaller than the height (44, 45) of the piston.

2. A multicomponent cartridge (1) in accordance with claim 1, wherein the venting element (22, 23) is formed as an elevated portion (37, 38, 39, 40).

3. A multicomponent cartridge (1) in accordance with claim 1, wherein the first venting element (22) includes a respective first elevated portion (37, 39) and the second venting element (23) includes a respective second elevation (38, 40).

4. A multicomponent cartridge in accordance with any one of the preceding claims, wherein at least one each of the first and second pistons (3, 4) has a respective piston body (33, 34) and a piston lip (35, 36), with the piston (3, 4) being able to be held in contact with the inner wall (24, 25) of the corresponding storage chamber (6, 7) by means of the piston lip, with the piston lip (35, 36) filling a ring space between the piston body (33, 34) and the inner wall of the storage chamber (6, 7), with the corresponding elevated portion (37, 38, 39, 40) of the venting element (22, 23) having a maximum height (52, 53) which is less than the spacing of the piston body (33, 34) from the inner wall (24, 25).

5. A multicomponent cartridge (1) in accordance with claim 3, wherein at least one of the first or second elevated portions (37, 38, 39, 40) is formed as a rib.

6. A multicomponent cartridge in accordance with any one of the claims 3 to 5, wherein the first elevated portion (37, 39) is arranged parallel to the second elevated portion (38, 40) so that a passage (29, 30) is formed between the first elevated portion (37, 39) and the corresponding second elevated portion (38, 40).

7. A multicomponent cartridge (1) in accordance with any one of the preceding claims, wherein the venting element (22, 23) is arranged opposite the dividing wall (28).

8. A multicomponent cartridge (1) in accordance with any one of the preceding claims, wherein the first storage chamber (6) has a first longitudinal axis (26) and the second storage chamber (7) has a second longitudinal axis (27), with the venting element (22, 23) extending parallel to the corresponding longitudinal axis (26, 27).

9. A multicomponent cartridge in accordance with any one of the preceding claims, wherein each of the storage chambers (6, 7) each has a peripheral dimension (31, 32), with the venting element (22, 23) having a width of a maximum of 1/20, preferably 1/50, particularly preferably 1/100, of the peripheral dimension (31, 32) of the corresponding storage chamber (6, 7).

10. A multicomponent cartridge in accordance with any one of the preceding claims, wherein the venting element (22, 23) has a height of a maximum of one percent, preferably 0.5%, particularly preferably 0.25%, of the diameter of the storage chamber (6, 7).

11. A multicomponent cartridge in accordance with any one of the claims 3 to 10, wherein the first elevated portion (37, 39) and the second elevated portion (38, 40) are arranged at a spacing (46, 47) from one another, with the spacing (46, 47) between the first elevated portion (37, 39) and the second elevated portion (38, 40) amounting to a maximum of 1/20, preferably 1/50, particularly preferably 1/100, of the peripheral dimension (31, 32) of the corresponding storage chamber (6, 7).

12. A multicomponent cartridge in accordance with any one of the preceding claims, wherein the venting element (22, 23) has at least one section (41, 48, 49) which is inclined with respect to the longitudinal axis (26, 27) and/or has at least one curved section (50, 51).

13. A multicomponent cartridge in accordance with any one of the preceding claims, wherein the venting element (22, 23) has a changeable height (52, 53).

14. A multicomponent cartridge in accordance with any one of the preceding claims, wherein the venting element (22, 23) has a width (54, 55) changeable over its length (42, 43).

## Revendications

1. Cartouche à plusieurs composants (1), comportant une première chambre de réserve (6) pour un premier composant (8), une deuxième chambre de réserve (7) pour un deuxième composant (9), ladite première chambre de réserve (6) étant séparée de ladite deuxième chambre de réserve (7), la première chambre de réserve (6) étant disposée à côté de la deuxième chambre de réserve (7), un premier piston (3) étant logé mobile dans la première chambre de réserve (6) et un deuxième piston (4) étant logé mobile dans la deuxième chambre de réserve (7), chacune des première ou deuxième chambres de réserve comportant respectivement une extrémité de remplissage (12, 13) et respectivement une extrémité de sortie (14, 15) et la première et la deuxième chambres de réserve (6, 7) étant reliées l'une à l'autre au moins au niveau de l'extrémité de sortie (14, 15), la première et la deuxième chambres de réserve (6, 7) comportant une première et une deuxième dimension en longueur (16, 17), qui s'étend entre l'extrémité de remplissage (12, 13) correspondante et l'extrémité de sortie (14, 15) correspondante, la première chambre de réserve (6) comportant une première paroi intérieure (24) et la deuxième chambre de réserve (7) comportant une deuxième paroi intérieure (25), ladite extrémité de sortie (14, 15) correspondante débouchant dans une première bouche (20) dans un premier élément de sortie (18) et dans une deuxième bouche (21) dans un deuxième élément de sortie (19), **caractérisée en ce qu'**un élément de ventilation (22, 23) est agencé en amont de la bouche (20, 21) correspondante au niveau d'au moins une des parois intérieures (24, 25) d'au moins une des première ou deuxième chambres de réserve (6, 7), ledit élément de ventilation (22, 23) s'étendant au maximum sur un tiers de la dimension en longueur (16, 17) des chambres de réserve (6, 7), ledit piston ayant une hauteur (44, 45), la longueur (42, 43) de l'élément de ventilation (22, 23) étant inférieure à la hauteur (44, 45) du piston.

2. Cartouche à plusieurs composants (1) selon la revendication 1, dans laquelle l'élément de ventilation (22, 23) est réalisé sous la forme d'un bossage (37, 38, 39, 40).

3. Cartouche à plusieurs composants (1) selon la revendication 1, dans laquelle le premier élément de ventilation (22) comporte respectivement un premier bossage (37, 39) et le deuxième élément de ventilation (23) comporte respectivement un deuxième bossage (38, 40).

4. Cartouche à plusieurs composants (1) selon l'une quelconque des revendications précédentes, dans laquelle au moins un des premier et deuxième pistons (3, 4) comportent chacun respectivement un corps de piston (33, 34) et une lèvre de piston (35, 36), le piston (3, 4) pouvant être maintenu au moyen de la lèvre de piston en contact avec la paroi intérieure (24, 25) de la chambre de réserve (6, 7) correspondante, ladite lèvre de piston (35, 36) remplissant un espace annulaire entre le corps de piston (33, 34) et la paroi intérieure de la chambre de réserve (6, 7), le bossage (37, 38, 39, 40) correspondant de l'élément de ventilation (22, 23) ayant une hauteur (52, 53) maximale qui est inférieure à la distance entre le corps de piston (33, 34) et la paroi intérieure (24, 25).

5. Cartouche à plusieurs composants (1) selon la revendication 3, dans laquelle au moins un des premier ou deuxième bossages (37, 38, 39, 40) est réalisé sous la forme d'une nervure.

6. Cartouche à plusieurs composants selon l'une quelconque des revendications 3 à 5, dans laquelle le premier bossage (37, 39) est parallèle au deuxième bossage (38, 40), de telle sorte qu'un canal (29, 30) se forme entre le premier bossage (37, 39) et le deuxième bossage (38, 40) correspondant.

7. Cartouche à plusieurs composants (1) selon l'une quelconque des revendications précédentes, dans laquelle l'élément de ventilation (22, 23) est disposé en regard de la cloison (28).

8. Cartouche à plusieurs composants (1) selon l'une quelconque des revendications précédentes, dans laquelle la première chambre de réserve (6) comporte un premier axe longitudinal (26) et la deuxième chambre de réserve (7) comporte un deuxième axe longitudinal (27), l'élément de ventilation (22, 23) étant parallèle à l'axe longitudinal (26, 27) correspondant.

9. Cartouche à plusieurs composants selon l'une quelconque des revendications précédentes, dans laquelle chacune des chambres de réserve (6, 7) comporte une dimension périphérique (31, 32), l'élément de ventilation (22, 23) ayant une largeur correspondant au maximum à 1/20, de préférence à 1/50, encore mieux à 1/100 de la dimension périphérique (31, 32) de la chambre de réserve (6, 7) correspondante.

10. Cartouche à plusieurs composants selon l'une quelconque des revendications précédentes, dans laquelle l'élément de ventilation (22, 23) a une hauteur correspondant au maximum à un pour cent, de préférence à 0,5 %, encore mieux à 0,25 % du diamètre de la chambre de réserve (6, 7).

11. Cartouche à plusieurs composants selon l'une quelconque des revendications 3 à 10, dans laquelle le premier bossage (37, 39) et le deuxième bossage (38, 40) sont disposés à une distance (46, 47) l'un de l'autre, ladite distance (46, 47) entre le premier bossage (37, 39) et le deuxième bossage (38, 40) correspondant au maximum à 1/20, de préférence à 1/50, encore mieux à 1/100 de la dimension périphérique (31, 32) de la chambre de réserve (6, 7) correspondante.

12. Cartouche à plusieurs composants selon l'une quelconque des revendications précédentes, dans laquelle l'élément de ventilation (22, 23) comporte au moins un tronçon (41, 48, 49) incliné par rapport à l'axe longitudinal (26, 27) et/ou comporte au moins un tronçon courbe (50, 51).

13. Cartouche à plusieurs composants selon l'une quelconque des revendications précédentes, dans laquelle l'élément de ventilation (22, 23) a une hauteur (52, 53) variable.

14. Cartouche à plusieurs composants selon l'une quelconque des revendications précédentes, dans laquelle l'élément de ventilation (22, 23) a une largeur (54, 55) variable sur la longueur (42, 43) de celui-ci.
